# FASCICULE DE BREVET EUROPEEN

(11) **EP 3 027 448 B1**
(45) Date de publication et mention de la délivrance du brevet: **20.09.2017**
(21) Numéro de dépôt: 14742267.9
(22) Date de dépôt: 24.06.2014
(51) Int. Cl.: B60K 5/12, B60R 21/02, B62D 21/15

(54) **BLOC AVANT POUR UN VÉHICULE AUTOMOBILE**
FRONTEINHEIT FÜR EIN MOTORFAHRZEUG
FRONT UNIT FOR A MOTOR VEHICLE

(30) Priorité: 01.08.2013 FR 1357684
(43) Date de publication de la demande: 08.06.2016
(73) Titulaire: Renault S.A.S., 92100 Boulogne-Billancourt (FR)
(72) Inventeur: PELLADEAU, Stéphane, F-78000 Versailles (FR); WARIN, Marc, F-92350 Le Plessis Robinson (FR)
(86) Numéro de dépôt international: PCT/FR2014/051569
(87) Numéro de publication internationale: WO 2015/015070

(56) Documents cités:
- DE-A1- 2 249 555
- DE-A1-102006 003 837
- FR-A1- 2 976 863

## Description

### DOMAINE TECHNIQUE DE L'INVENTION

Le domaine technique de l'invention est celui des véhicules automobiles et en particulier des ensembles de sécurité passive d'un véhicule automobile.

La sécurité passive désigne l'ensemble des éléments qui par leur présence ou leur fonctionnement permettent de minimiser la gravité d'un accident.

Mise en application aux véhicules automobiles, la sécurité passive entre en action « pendant » l'accident, à la différence de la sécurité active qui intervient « avant » l'accident et la sécurité tertiaire « après » l'accident.

### ETAT DE LA TECHNIQUE ANTERIEURE

Sont déjà connus de façon générale des assemblages, dans un véhicule automobile, entre un étrier destiné à être relié à une caisse du véhicule et une coiffe destinée à être reliée à un moteur du véhicule, l'étrier et la coiffe étant solidaires l'un à l'autre. Cela permet notamment au moteur d'être suspendu, par exemple sur des longerons de la caisse du véhicule.

Toutefois, la contrainte d'allégement des nouveaux véhicules implique notamment l'utilisation de matériaux plastiques en lieu et place des aluminiums ou aciers utilisés couramment sur les composants de suspension moteur.

Or, si de tels matériaux sont conformes à d'autres exigences telles que des exigences acoustiques et de fiabilité, ils peuvent être incompatibles avec des scénarios de rupture de pièces, scenarios qui sont imposés notamment par les exigences de sécurité passive.

Dans le cas d'un ensemble permettant la fixation du moteur sur la caisse du véhicule formé par une coiffe, l'utilisation de matériaux plastiques, par exemple pour l'étrier, implique lors d'un accident une rupture de l'étrier précédent une rupture de la coiffe reliée au moteur. Or, dans une telle configuration et dans le cas d'un tel accident, notamment en cas de choc frontal, le moteur serait amené à se déplacer brusquement vers l'arrière du véhicule emportant dans son mouvement par la coiffe des pièces périphériques dont le déplacement serait de nature à aggraver un accident. Le document DE2249555 divulgue un véhicule avec un groupe motopropulseur selon le préambule de la revendication 1 et constitué par exemple d'un moteur, d'un embrayage et d'une boîte de vitesse, installé à l'avant de l'habitacle passagers selon une direction longitudianale, de façon à provoquer un mouvement relatif du groupe vers l'arrière en cas de choc frontal.
Le document DE102006003837 divulgue un dispositif de suspension de groupe motopropulseur de véhicule. Le dispositif comporte une tige de choc dont une partie, en cas de collision se rompt sous l'effet d'une composante de la force de décélération du véhicule qui est perpendiculaire à cette partie de tige.
Le document FR2976863 divulgue un système de retenue de groupe motopropulseur qui comporte une biellette de reprise de couple dont le pivotement en cas de choc est limité par une butée, de manière à favoriser un glissement du moteur vers le bas pour le faire passer sous l'habitacle du véhicule.

### EXPOSE DE L'INVENTION

Le dispositif décrit par la suite vise à remédier à tout ou partie des inconvénients de l'état de la technique et notamment à réaliser de manière simple et fiable un ensemble de sécurité passive d'un véhicule automobile respectant à la fois les contraintes d'allègement du véhicule et de sécurité passive désirées.

Pour ce faire, est proposé selon un premier aspect de l'invention un ensemble de sécurité passive d'un véhicule automobile comprenant un étrier destiné à être relié à une caisse du véhicule et une coiffe destinée à être reliée à un moteur du véhicule, l'étrier et la coiffe étant solidaires l'un à l'autre, l'ensemble étant caractérisé en ce qu'il comporte un élément de coupe solidaire de l'étrier et présentant une lame disposée en regard d'une zone à couper de la coiffe, la lame et la coiffe étant séparées d'une distance inférieure aux déformations de fonctionnement hors choc frontal.

Un tel élément de coupe permet en particulier lors d'un choc, de couper la coiffe au niveau de la zone à couper avant la rupture de l'étrier, et ce quelque soit le matériau et la structure dudit étrier et de ladite coiffe.

Dans une telle configuration, il est possible de concevoir un véhicule à la fois plus léger et respectant le scénario de sécurité passive imposé par un cahier des charges.

Selon une caractéristique technique particulière, la lame est située suivant un axe longitudinal du véhicule. En effet, le véhicule présente longitudinalement un avant et un arrière, définissant l'axe longitudinal du véhicule, la lame est alors dans cette configuration alignée suivant cet axe longitudinal.

Cela permet notamment là lame de l'élément de coupe d'assurer la rupture de la coiffe avant celle de l'étrier en réponse à un choc frontal dirigé longitudinalement par rapport au véhicule.

Avantageusement la lame est située à l'arrière par rapport à la coiffe. Une telle caractéristique est particulièrement avantageuse en cas de choc frontal.

Selon une configuration particulière, la coiffe est fixée à l'étrier par encastrement d'un nez de la coiffe dans un orifice de l'étrier. Dans ce cas et dans un mode de réalisation, l'étrier comprend au moins un élément de filtration pour filtrer des vibrations entre l'étrier et la coiffe.

Cet élément de filtration peut être formé d'un caoutchouc tubulaire disposé contre une paroi intérieure de l'orifice de l'étrier et enveloppant coaxialement une carcasse tubulaire sensiblement rigide dans laquelle vient s'encastrer la coiffe. Cela permet d'améliorer la résistance mécanique de l'encastrement du nez de la coiffe dans l'orifice de l'étrier prévu à cet effet.

Avantageusement, l'élément de coupe présente une paroi principale portant la lame et une base fixée, dans une position assemblée, à l'étrier. Selon une caractéristique particulière la lame est formée par un biseau d'un bord périphérique de la paroi principale de l'élément de coupe.

Cela permet notamment à l'élément de coupe de présenter une lame solide et permettant une coupe franche et nette de la coiffe en cas d'accident.

Selon une caractéristique particulière, la lame présente une hauteur égale à la hauteur de la coiffe au niveau de la zone à couper. Cela permet, notamment de couper efficacement le nez de la coiffe lors de l'accident et seulement elle.

Avantageusement, l'élément de coupe présente un ergot saillant par rapport à la paroi principale du côté de l'étrier dans la position assemblée. Un tel ergot présente une double fonction qui est de renforcer ledit élément de coupe et d'assurer le bon positionnement de la paroi principale portant la lame par rapport à l'étrier. Un tel positionnement doit être effectué pour que la lame soit placée à la distance désirée à la fois de la zone à coupe de la coiffe, mais également de l'étrier.

De préférence encore, l'ergot est situé à l'arrière par rapport à la lame et/ou en dessous de la lame par rapport à un axe vertical du véhicule de sorte à ne pas gêner la coupe en cas d'accident.

Dans une configuration particulière non limitative, l'étrier est en matériaux composites et/ou la coiffe est en aluminium. Cela permet un allègement de l'ensemble et en particulier du véhicule.

Selon une configuration particulière, l'élément de coupe est en acier. Ce métal permet de concevoir un élément de coupe à la fois résistant et facile et économique à fabriquer.

Avantageusement, l'élément de coupe est formé monobloc.

Est également proposé selon un autre aspect de l'invention, un véhicule automobile caractérisé en ce qu'il comprend un ensemble comportant tout ou partie des caractéristiques précitées.

Un tel véhicule peut donc assurer une sécurité passive tout en étant plus léger.

Généralement, les véhicules présentent deux ensembles coiffe/étrier, chacun fixé d'un côté du moteur, l'un à gauche par rapport au sens de circulation du véhicule, et l'autre à droite.

L'invention est décrite dans ce qui précède à titre d'exemple. Il est entendu que l'homme du métier est à même de réaliser différentes variantes de réalisation de l'invention, par exemple en associant différentes caractéristiques prises seules ou en combinaison en fonction de son besoin, sans pour autant sortir du cadre de l'invention.

### BREVE DESCRIPTION DES FIGURES

D'autres caractéristiques et avantages de l'invention ressortiront à la lecture de la description qui suit, donnée uniquement à titre d'exemple, en référence aux figures annexées, qui illustrent :
- figure 1, une vue schématique de gauche de l'avant d'un véhicule ;
- figure 2, une vue en perspective d'un ensemble de sécurité passive d'un véhicule automobile comprenant un étrier, une coiffe et un élément de coupe selon un mode de réalisation ;
- figure 3, une vue en perspective d'un élément de coupe selon un mode de réalisation.

Pour plus de clarté, les éléments identiques ou similaires sont repérés par des signes de référence identiques sur l'ensemble des figures.

### DESCRIPTION DETAILLEE D'UN MODE DE REALISATION

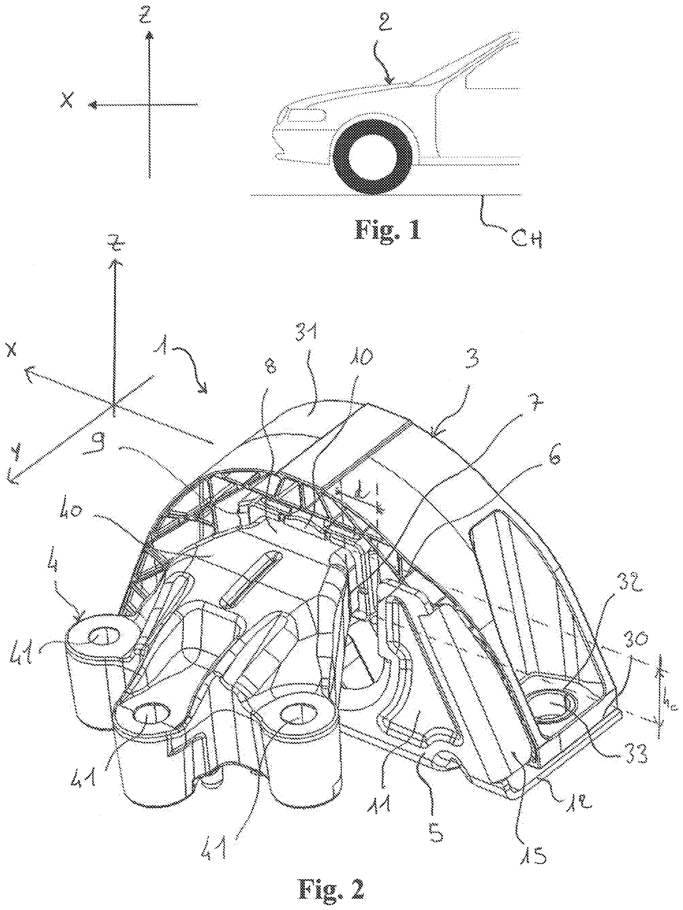

La figure 1 illustre un schéma d'une partie avant d'un véhicule 2 automobile, le véhicule 2 automobile roulant sur une chaussée CH selon une direction longitudinale X. La chaussée CH2 définit un plan horizontal et un axe vertical Z est définit comme étant perpendiculaire à ce plan horizontal.

La figure 2 illustre une vue en perspective d'un ensemble 1 de sécurité passive d'un véhicule 2 automobile selon un mode de réalisation et dans une position assemblée.

Est illustré en particulier, un ensemble 1 de sécurité passive d'un véhicule 2 automobile comprenant :
- un étrier 3 destiné à être relié à une caisse du véhicule 2 ;
- une coiffe 4 en aluminium destinée à être reliée à un moteur du véhicule 2, l'étrier 3 et la coiffe 4 étant solidaires l'un à l'autre ;
- un élément de coupe 5 en acier solidaire directement, ou indirectement via une pièce intermédiaire, de l'étrier 3, l'élément de coupe 5 comprenant une lame 6 disposée en regard d'une zone 7 à couper de la coiffe 4 ;
la lame 6 et la coiffe 4 étant séparées d'une distance d inférieure à une déformation maximale limite dudit étrier 3 qui provoquerait sa rupture mécanique.

Dans l'exemple illustré, l'étrier 3 est en matériaux composites et présente une structure alvéolée, l'étrier présentant une forme sensiblement hémicylindrique munie d'une base 30 sensiblement plane et une enveloppe 31 formant sensiblement une portion de demi-cylindre.

Bien que l'étrier 3 présente une structure alvéolée renforçant sa résistance aux contraintes, ledit étrier 3 présente une structure plus déformable en cas de choc que la coiffe 4 en structure aluminium.

Ledit étrier 3 est destiné à être fixé à la caisse du véhicule 2, et en particulier sur une rehausse elle-même fixée sur un longeron du véhicule 2 automobile (non illustré). Cette fixation est effectuée au moyen d'ensembles vis-écrous, chacun traversant un orifice 32 de la base 30 de l'étrier 3. Ledit étrier comporte ici deux orifices 32, un orifice 32 étant situé de chaque côté dudit étrier 3.

Une bague 33 de renfort est montée solidaire de l'étrier 3 et assemblée en force dans chacun des orifices 32 pour renforcer localement l'étrier 3 au niveau de sa fixation avec la caisse du véhicule 2.

La coiffe 4 présente ici trois orifices 41 sensiblement cylindrique est orientée verticalement selon l'axe Z dans une position assemblée, ces orifices 41 étant prévus pour être traversés par des vis venant se visser dans des trous taraudés du moteur (non illustré). Ces trois vis permettent ainsi la fixation de la coiffe 4 au moteur.

L'étrier 3 présente un orifice 9 orientée sensiblement transversalement selon l'axe Y par rapport au véhicule dans une position assemblée, cet orifice 9 étant prévu pour y loger en force un nez 8 de la coiffe 4. Le nez 8 de la coiffe 4 est ici situé à l'opposé des orifices 41 par rapport à son corps 40.

Pour éviter la transmission des vibrations entre le moteur et la caisse du véhicule 2, un élément de filtration 10 est prévu entre le nez 8 de la coiffe 4 et ledit orifice 9 de l'étrier 3, cet élément de filtration étant un élément en caoutchouc présentant une forme tubulaire de sorte à entourer le nez de la coiffe et venir contre une paroi intérieure de l'orifice 9 d'encastrement.

Par ailleurs, est également prévu pour améliorer la fiabilité de l'encastrement du nez 8 de la coiffe 4 dans l'orifice 9 de l'étrier 3 une carcasse rigide tubulaire dans laquelle s'encastre directement ledit nez 8 de la coiffe 4.

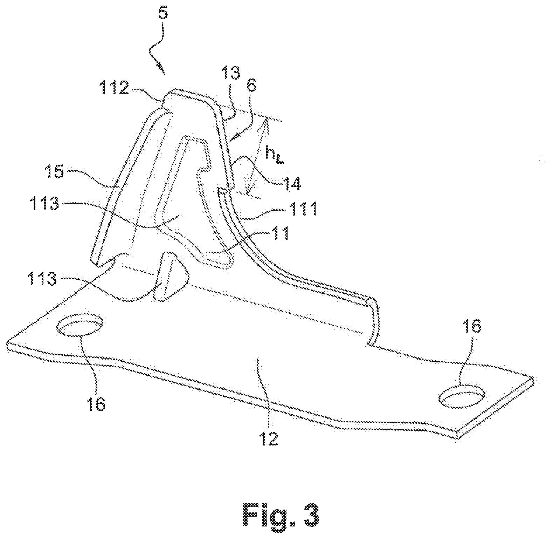

L'élément de coupe 5 visible figure 2 et illustré plus en détail figure 3 est formé monobloc, c'est-à-dire en un seul tenant, par la mise en oeuvre d'un procédé d'emboutissage. Cet élément de coupe comprend en particulier une paroi principale 11 portant la lame 6 et une base 12 pour sa fixation à l'étrier 3.

Plus précisément, la base 12 comporte deux trous de fixation 16 pour sa fixation avec l'étrier 3.

Plus précisément, la base 12 est agencée pour coopérer avec la base 30 de l'étrier 3, de sorte que dans une position assemblée, la base 12 de l'élément de coupe est placée en sandwich entre la caisse, ou éventuellement un autre élément solidaire de cette caisse tel qu'une rehausse, et ledit étrier 3.

Par ailleurs, les trous de fixations 16 sont placés, dans la position assemblée, en regard des orifices 32 de base 30 de l'étrier 3 lesquels sont sensiblement de même diamètre de sorte à être traversés ensemble par la bague 33 de renfort destinée à être traversée elle-même par la vis pour leur fixation avec la caisse du véhicule 2.

La base 12 présente une forme sensiblement plane, et parallèle à un plan horizontal dans la position de fixation telle qu'illustrée figure 2.

La paroi principale 11 est disposée de façon sensiblement perpendiculaire à la base 12 de sorte à venir se placer, toujours dans la position assemblée, en regard d'une zone à couper de la coiffe 4.

En outre, la paroi principale 11 est délimitée par un bord périphérique 14 et en particulier longitudinalement par un bord avant 111 destinée à être orienté vers l'avant du véhicule et un bord arrière 112 destinée à être orienté vers l'arrière du véhicule, la lame 6 étant formée par un biseau 13 du bord avant 111.

La lame 6 est ainsi positionnée suivant l'axe longitudinal X du véhicule 2. La lame 6 est également située à l'arrière par rapport à la coiffe 4 de sorte à être active en cas de choc frontal.

Des zones de renforts 113 permettent de renforcer la résistance mécanique de l'élément de coupe 5, ces renforts 113 étant ici formé par l'emboutissage de l'élément de coupe.

Par ailleurs, la lame 6 présente ici une hauteur h_{L} au moins égale à la hauteur h_{C} de la coiffe 4 au niveau de la zone 7 à couper de sorte à assurer une coupe franche du nez 8 de la coiffe 4 en cas d'accident.

Est également illustré figures 2 et 3, un ergot 15 de l'élément de coupe 5, cet ergot 15 étant saillant perpendiculaire par rapport à la paroi principale 11 du côté de l'étrier 3 dans la position assemblée, ceci afin de renforcer ledit élément de coupe 5 et assurer le bon positionnement de la paroi principale 11 portant la lame 6 par rapport à l'étrier 3.

Cet ergot 15 est plus précisément un prolongement de la paroi principale 11 au niveau de son bord arrière 112 formée après emboutissage. L'ergot 15 permet de rigidifier ou raidir la paroi principale 11.

Un tel élément de coupe 5 est donc une pièce peu encombrante et relativement légère par rapport au véhicule, plus légère que l'étrier 3 s'il était métallique et assez résistant pour assurer la coupe du nez 8 de la coiffe 4 en cas d'accident.

La lame 6 est ici située à une distance d prédéterminée de la zone 7 à couper. Cette distance sera choisie en fonction de la résistance à la déformation de la structure de l'étrier 3, c'est-à-dire de sa capacité à se déformer plastiquement sans se rompre.

Cette distance d est ici égale à la course maximum de la déformation de l'étrier 3 avant sa rupture.

Ainsi, lors d'un choc frontal notamment, le moteur fixé rigidement à la coiffe 4 en aluminium plus rigide que l'étrier, va se déplacer vers l'arrière du véhicule déformant ledit étrier 3 qui est solidaire de la caisse du véhicule 2, la distance entre l'étrier 3 et la coiffe 4 variant en décroissant lors du choc. L'étrier va se déformer sans se rompre au moins jusqu'au moment ou la lame 6 entre en contact avec la zone 7 de la coiffe 4 à couper, coupant alors la coiffe 4 et séparant son nez 8, emmanché dans l'étrier 3, de son corps 40.

Une fois coupée, la coiffe 4 est ainsi désolidarisée de l'étrier 3 avant la rupture de celui-ci permettant au moteur de poursuivre sa course sans emmener dans son mouvement d'autres pièces périphériques.

Un tel élément de coupe 5 permet donc, quelque soit les matériaux utilisés pour concevoir la coiffe 4 et l'étrier 3, d'obtenir un ensemble de sécurité passive, respectant le cahier des charge tant en terme d'allègement du véhicule qu'en terme de sécurité passive.

L'invention est décrite dans ce qui précède à titre d'exemple. Il est entendu que l'homme du métier est à même de réaliser différentes variantes de réalisation de l'invention sans pour autant sortir du cadre de l'invention défini dans les revendications.

Par exemple les moyens de fixation tels que les vis et écrous peuvent être remplacés par des moyens équivalent, par exemple des rivets et/ou des soudures. Toutefois, des moyens de fixations amovibles sont préférés.

Les matériaux peuvent également varier en fonction des caractéristiques désirée tout en respectant le cahier de charges en matière de sécurité passive.

## Revendications

1. Ensemble (1) de sécurité passive d'un véhicule (2) automobile comprenant un étrier (3) destiné à être relié à une caisse du véhicule (2) et une coiffe (4) destinée à être reliée à un moteur du véhicule (2), l'étrier (3) et la coiffe (4) étant solidaires l'un à l'autre, l'ensemble (1) comportant un élément de coupe présentant une lame, **caractérisé en ce que** l'élément de coupe (5) est solidaire de l'étrier (3) et **en ce que** la lame (6) est disposée en regard d'une zone (7) à couper de la coiffe (4), la lame (6) et la coiffe (4) étant séparées d'une distance (d) inférieure à une déformation maximale limite dudit étrier (3) qui provoquerait sa rupture mécanique.

2. Ensemble (1) selon la revendication 1, **caractérisé en ce que** la lame (6) est située suivant un axe longitudinal (X) du véhicule (2).

3. Ensemble (1) selon la revendication 1 ou 2, **caractérisé en ce que** le véhicule (2) présente longitudinalement un avant et un arrière, la lame (6) étant située à l'arrière par rapport à la coiffe (4).

4. Ensemble (1) selon l'une quelconque des revendications précédentes, **caractérisé en ce que** la coiffe (4) est fixée à l'étrier (3) par encastrement d'un nez (8) de la coiffe (4) dans un orifice (9) de l'étrier (3).

5. Ensemble (1) selon la revendication 4, **caractérisé en ce que** l'étrier (3) comprend au moins un élément de filtration (10) pour filtrer des vibrations entre l'étrier (3) et la coiffe (4).

6. Ensemble (1) selon l'une quelconque des revendications précédentes, **caractérisé en ce que** l'élément de coupe (5) présente une paroi principale (11) portant la lame (6) et une base (12) fixée, dans une position assemblée, à l'étrier (3).

7. Ensemble (1) selon la revendication 6, **caractérisé en ce que** la lame (6) est formée par un biseau (13) d'un bord périphérique (14) de la paroi principale (11) de l'élément de coupe (5).

8. Ensemble (1) selon l'une quelconque des revendications précédentes, **caractérisé en ce que** la lame (6) présente une hauteur (h_{L}) égale à la hauteur (h_{C}) de la coiffe (4) au niveau de la zone (7) à couper.

9. Ensemble (1) selon l'une quelconque des revendications précédentes, **caractérisé en ce que** l'élément de coupe (5) est en acier.

10. Ensemble (1) selon l'une quelconque des revendications précédentes, **caractérisé en ce que** l'étrier (3) est en matériaux composites et/ou la coiffe (4) est en aluminium.

11. Véhicule (2) automobile **caractérisé en ce qu'**il comprend un ensemble (1) de sécurité passive selon l'une quelconque des revendications précédentes.

## Patentansprüche

1. Anordnung (1) zur passiven Sicherheit eines Kraftfahrzeugs (2), welche einen Bügel (3), der dazu bestimmt ist, mit einer Karosserie des Fahrzeugs (2) verbunden zu werden, und eine Haube (4), die dazu bestimmt ist, mit einem Motor des Fahrzeugs (2) verbunden zu werden, umfasst, wobei der Bügel (3) und die Haube (4) fest miteinander verbunden sind, wobei die Anordnung (1) ein Schneidelement umfasst, das eine Klinge aufweist, **dadurch gekennzeichnet, dass** das Schneidelement (5) mit dem Bügel (3) fest verbunden ist, und dadurch, dass die Klinge (6) gegenüber einem zu schneidenden Bereich (7) der Haube (4) angeordnet ist, wobei die Klinge (6) und die Haube (4) durch einen Abstand (d) getrennt sind, der kleiner als eine maximale Verformungsgrenze des Bügels (3) ist, welche dessen mechanischen Bruch hervorrufen würde.

2. Anordnung (1) nach Anspruch 1, **dadurch gekennzeichnet, dass** die Klinge (6) entlang einer Längsachse (X) des Fahrzeugs (2) angeordnet ist.

3. Anordnung (1) nach Anspruch 1 oder 2, **dadurch gekennzeichnet, dass** das Fahrzeug (2) in Längsrichtung einen vorderen und einen hinteren Teil aufweist, wobei sich die Klinge (6) bezüglich der Haube (4) hinten befindet.

4. Anordnung (1) nach einem der vorhergehenden Ansprüche, **dadurch gekennzeichnet, dass** die Haube (4) an dem Bügel (3) durch Einspannung einer Nase (8) der Haube (4) in einer Öffnung (9) des Bügels (3) befestigt ist.

5. Anordnung (1) nach Anspruch 4, **dadurch gekennzeichnet, dass** der Bügel (3) wenigstens ein Filterungselement (10) umfasst, um Schwingungen zwischen dem Bügel (3) und der Haube (4) zu filtern.

6. Anordnung (1) nach einem der vorhergehenden Ansprüche, **dadurch gekennzeichnet, dass** das Schneidelement (5) eine Hauptwand (11), welche die Klinge (6) trägt, und einen Fuß (12), der in einer zusammengebauten Position an dem Bügel (3) befestigt ist, aufweist.

7. Anordnung (1) nach Anspruch 6, **dadurch gekennzeichnet, dass** die Klinge (6) von einer Fase (13) eines Umfangsrandes (14) der Hauptwand (11) des Schneidelements (5) gebildet wird.

8. Anordnung (1) nach einem der vorhergehenden Ansprüche, **dadurch gekennzeichnet, dass** die Klinge (6) eine Höhe (h_{L}) aufweist, die gleich der Höhe (h_{C}) der Haube (4) an dem zu schneidenden Bereich (7) ist.

9. Anordnung (1) nach einem der vorhergehenden Ansprüche, **dadurch gekennzeichnet, dass** das Schneidelement (5) aus Stahl besteht.

10. Anordnung (1) nach einem der vorhergehenden Ansprüche, **dadurch gekennzeichnet, dass** der Bügel (3) aus Verbundwerkstoffen besteht und/oder die Haube (4) aus Aluminium besteht.

11. Kraftfahrzeug (2), **dadurch gekennzeichnet, dass** es eine Anordnung (1) zur passiven Sicherheit nach einem der vorhergehenden Ansprüche umfasst.

## Claims

1. Passive safety assembly (1) for a motor vehicle (2), comprising a yoke (3) intended to be connected to a body of the vehicle (2) and a cover (4) intended to be connected to an engine of the vehicle (2), the yoke (3) and the cover (4) being secured to one another, the assembly (1) comprising a cutting element having a blade, **characterized in that** the cutting element (5) is secured to the yoke (3), and **in that** the blade (6) is arranged so as to face a region (7) of the cover (4) that is to be cut, the blade (6) and the cover (4) being separated by a distance (d) which is less than a maximum limit deformation of said yoke (3) that would cause mechanical breaking thereof.

2. Assembly (1) according to Claim 1, **characterized in that** the blade (6) is situated along a longitudinal axis (X) of the vehicle (2).

3. Assembly (1) according to Claim 1 or 2, **characterized in that** the vehicle (2) has, longitudinally, a front and a rear, the blade (6) being situated to the rear with respect to the cover (4).

4. Assembly (1) according to any one of the preceding claims, **characterized in that** the cover (4) is fastened to the yoke (3) by fitting a nose (8) of the cover (4) into an orifice (9) of the yoke (3).

5. Assembly (1) according to Claim 4, **characterized in that** the yoke (3) comprises at least one filtering element (10) for filtering vibrations between the yoke (3) and the cover (4).

6. Assembly (1) according to any one of the preceding claims, **characterized in that** the cutting element (5) has a main wall (11) bearing the blade (6) and a base (12) fastened, in an assembled position, to the yoke (3).

7. Assembly (1) according to Claim 6, **characterized in that** the blade (6) is formed by a bevel (13) of a peripheral edge (14) of the main wall (11) of the cutting element (5).

8. Assembly (1) according to any one of the preceding claims, **characterized in that** the blade (6) has a height (h_{L}) equal to the height (h_{C}) of the cover (4) at the region (7) to be cut.

9. Assembly (1) according to any one of the preceding claims, **characterized in that** the cutting element (5) is made of steel.

10. Assembly (1) according to any one of the preceding claims, **characterized in that** the yoke (3) is made of composite materials and/or the cover (4) is made of aluminium.

11. Motor vehicle (2), **characterized in that** it comprises a passive safety assembly (1) according to any one of the preceding claims.
